# EUROPÄISCHE PATENTSCHRIFT

(11) **EP 3 938 715 B1**
(45) Veröffentlichungstag und Bekanntmachung des Hinweises auf die Patenterteilung: **01.05.2024**
(21) Anmeldenummer: 20714116.9
(22) Anmeldetag: 13.03.2020
(51) Int. Cl.: H05B 3/34, H05B 1/00, F24D 13/02

(54) **HEIZMATTE ZUR VERWENDUNG IN EINEM FUSSBODENAUFBAU, FUSSBODENAUFBAU UND VERFAHREN ZU DESSEN HERSTELLUNG**
HEATING MAT FOR USE IN A FLOOR STRUCTURE, FLOOR STRUCTURE, AND METHOD FOR PRODUCING SAME
TAPIS CHAUFFANT DESTINÉ À ÊTRE UTILISÉ DANS UNE STRUCTURE DE PLANCHER, STRUCTURE DE PLANCHER ET SON PROCÉDÉ DE PRODUCTION

(30) Priorität: 15.03.2019 DE 102019106705
(43) Veröffentlichungstag der Anmeldung: 19.01.2022
(73) Patentinhaber: Lufthansa Technik AG, 22335 Hamburg (DE); Villinger GmbH, 6142 Mieders (AT)
(72) Erfinder: PAGEL, Florian, 25355 Barmstedt (DE); KOCH, Romana, 22419 Hamburg (DE); BOCK, Karl, 22537 Hamburg (DE); VILLINGER, Markus, 6142 Mieders (AT); BEYER, Nils, 25474 Ellerbek (DE); DOSE, Niels, 22391 Hamburg (DE)
(74) Vertreter: Glawe, Delfs, Moll
(86) Internationale Anmeldenummer: PCT/EP2020/000066
(87) Internationale Veröffentlichungsnummer: WO 2020/187441

(56) Entgegenhaltungen:
- EP-A1- 3 015 360
- EP-A2- 1 046 576
- EP-A2- 1 854 719
- EP-A2- 3 095 690
- WO-A1-01/17850
- WO-A1-2017/186895
- DE-A1-102012 207 708

## Beschreibung

Die Erfindung betrifft eine Heizmatte zur Verwendung in einem Fußbodenaufbau insbesondere in Flugzeugen, einen Fußbodenaufbau mit entsprechender Heizmatte sowie ein Verfahren zur Herstellung eines solchen Fußbodenaufbaus.

In der Reiseflughöhe von Verkehrsflugzeugen (üblicherweise 30.000 ft bzw. 9.145 m) herrschen Außentemperaturen von -50°C bis zu -60°C. Um in der Kabine eines Verkehrsflugzeuges angenehme Temperaturen von in der Regel zwischen 20°C und 24°C zu erreichen, sind eine oder mehrere Klimaanlagen vorgesehen, die den Kabineninnenraum entsprechend aufheizen. Die Flugzeugkabine ist dabei rundum durch Glasfaser-Matten wärmegedämmt.

Vor allem im Bereich der Flugzeugtüren sind aus konstruktiven Gründen regelmäßig Kältebrücken vorhanden, welche zu einer gegenüber den anderen Bereichen der Kabine deutlich niedrigeren Temperatur des Fußbodens im Türbereich führen. Das ist sowohl für die Passagiere, die den Türbereich häufig nutzen, um auf das Freiwerden einer Bordtoilette zu warten, als auch die Besatzung, deren Sitze für Start- und Landung regelmäßig im Türbereich angeordnet sind, unangenehm und kann sogar abträglich für die Gesundheit sein. Aber auch in anderen Bereichen kann es zu Kältebrücken und somit unerwünscht niedriger Fußbodentemperatur kommen, bspw. im Küchen- oder im Passagierbereich.

Im Stand der Technik ist ein System bekannt, bei dem in die, die Grundlage des Bodenaufbaus bildende Bodenplatte ein Heizdraht sowie ein Temperatursensor integriert ist. Über eine Steuerungseinheit wird der Heizdraht mit elektrischem Strom versorgt, um eine gewünschte Temperatur zu erreichen. Über den Temperatursensor wird dabei sichergestellt, dass die Bodenplatte nicht überhitzt.

Nachteilig an diesem Stand der Technik ist die Korrosionsanfälligkeit. Insbesondere im Bereich der Flugzeugtüren, als auch im Bereich der Bordküchen ist der Fußboden regelmäßig Feuchtigkeit ausgesetzt, der erfahrungsgemäß leicht zur Korrosion des Heißdrahtes bei den bekannten Bodenplatten führt. Entsprechende Korrosionsschäden führen regelmäßig zum Ausfall der Beheizung einer Bodenplatte, der einen Austausch der gesamten Bodenplatte erforderlich macht. Da die Bodenplatte die Grundlage des gesamten Bodenaufbaus ist und somit also die unterste Schicht des Fußbodens bildet, ist ein Austausch einer Bodenplatte mit ausgefallener Beheizung sehr aufwendig und kostenintensiv. Insbesondere wenn die fragliche Bodenplatte teilweise unter Einbauten der Kabine, wie bspw. der Küche, angeordnet ist, lässt sie sich ggf. überhaupt nicht mit vertretbarem Aufwand austauschen, sodass dann die Fußbodenbeheizung in diesem Bereich bis zur Generalüberholung der Kabine ausgefallen bleibt.

Fussbodenaufbauten sind aus den Dokumenten WO01/17850A1, EP1046576A2 und EP3015360A1 bekannt. Aufgabe der vorliegenden Erfindung ist es, eine Heizmatte zur Verwendung in einem Fußbodenaufbau insbesondere in Flugzeugen, einen entsprechenden Fußbodenaufbau sowie ein Verfahren zur Herstellung eines solchen Fußbodenaufbaus zu schaffen, bei dem die Nachteile aus dem Stand der Technik nicht mehr oder nur noch in vermindertem Umfang auftreten.

Gelöst wird diese Aufgabe durch eine Heizmatte gemäß dem Hauptanspruch, einen Fußbodenaufbau gemäß dem Anspruch 8 sowie ein Verfahren gemäß dem Anspruch 11. Vorteilhafte Weiterbildungen sind Gegenstand der abhängigen Ansprüche.

Demnach betrifft die Erfindung eine Heizmatte zur Verwendung in einem Fußbodenaufbau insbesondere in Flugzeugen, wobei die Heizmatte einen Schichtaufbau mit mehreren, untereinander fest verbundenen Schichten aufweist, mit der Schichtfolge:
a) trittfeste Schutzschicht umfassend ein Rohfußbodenbelagsmaterial aus glasfaserverstärktem und/oder aramidfaserverstärktem Kunststoff;
b) elektrisch leitende Erdschlusserkennungsschicht;
c) elektrische Isolationsschicht; und
d) flächiges, elektrisches Heizelement umfassend eine flächige, elektrisch leitfähige Heizlackschicht e) eine weitere elektrische Isolationsschicht (3);
f) eine weitere elektrisch leitende Erdschlusserkennungsschicht (4); und
g) eine weitere trittfeste Schutzschicht (5). Weiterhin betrifft die Erfindung ein Fußbodenaufbau, insbesondere für ein Flugzeug, umfassend
   - einen Rohfußboden mit einer Aussparung für eine Heizmatte,
   - eine darin angeordnete erfindungsgemäße Heizmatte, und
   - einem auf den Rohfußboden und über die Heizmatte verlegtem Fußbodenbelag,
   wobei die Aussparung im Rohfußboden an die Breite, Länge und Dicke der Heizmatte angepasst ist.

Außerdem betrifft die Erfindung ein Verfahren zur Herstellung eines erfindungsgemäßen Fußbodenaufbaus, mit den Schritten:
a) Herstellen einer, an die Maße der Heizmatte angepasste Aussparung in die oberste Schicht des Rohfußbodens;
b) Einbringen der Heizmatte in die Aussparung; und
c) Verlegen eines Fußbodenbelags auf dem Rohfußboden und über die Heizmatte.

Zunächst werden einige in Zusammenhang mit der Erfindung verwendete Begriffe erläutert.

Eine Schutzschicht ist "trittfest", wenn sie auch häufigem Betreten und den damit verbundenen Belastungen dauerhaft standhält und die darunter liegenden Schichten vor diesen Belastungen schützt. Vorzugsweise ist die Schutzschicht auch noch "kratzfest", sodass auch bspw. im Profil von Schuhen mitgeführte Steinchen die Schutzschicht nicht beschädigen.

Ein Kabel ist "steckerlos" an einer Schicht befestigt, wenn das Kabel lösbar oder unlösbar an dem Element angebunden ist, wobei die Ausdehnung der Anbindung in Dickenrichtung der Schicht nicht oder nur unwesentlichen größer ist als die Ausdehnung des Kabels in dieser Richtung. Bspw. kann das Kabel an einem geeigneten Lötanschluss des Elementes festgelötet sein.

Die erfindungsgemäße Heizmatte zeichnet sich durch ein flächiges, elektrisches Heizelement umfassend eine flächige, elektrisch leitfähige Heizlackschicht aus. Bei einem elektrisch leitfähigen Heizlack handelt es sich um ein Material, welches - wenn von elektrischem Strom durchflossen - Wärme häufig hauptsächlich in Form von Infrarotstrahlung an die Umgebung abgibt. Die Heizlackschicht ist flächig, d. h. sie folgt nicht wie bspw. ein Heizdraht einer geschlängelten Bahn zwischen zwei Anschlusspunkten, um letztendlich ein flächiges Heizelement zu bilden, sondern füllt vielmehr das Heizelement flächig aus. Durch die in einem Heizlack regelmäßig inhärente Temperaturregelung, die auf der lokalen Veränderung des elektrischen Widerstandes im Heizlack fußt, kann dennoch grundsätzlich erreicht werden, dass der Heizlack in der gesamten Fläche von elektrischem Strom durchflossen wird und entsprechend Wärme abgibt. Gleichzeitig ergibt sich aus dem temperaturabhängigen elektrischen Widerstand häufig eine maximal erreichbare Temperatur des Heizlacks sowie die Möglichkeit der Temperaturkontrolle durch Messung des Widerstandes.

Es ist bevorzugt, wenn die elektrisch leitfähige Heizlackschicht vorzugsweise kohlenstoffnanoröhrenfrei ist und/oder ein Polymer und/oder ein Halbleitermaterial umfasst. Ein entsprechender, geeigneter Heizlack ist bspw. in DE 10 2012 207 708 A1 beschrieben, auf die vollumfänglich verwiesen wird. Insbesondere wird auf die als bevorzugt dargestellte Ausführungsform gemäß den dortigen Absätzen [0015] und [0041] verwiesen.

Zur Bildung eines für einen Schichtaufbau geeigneten Heizelements kann der Heizlack auf einem bspw. folienarten Substrat aufgebracht sein. Es ist aber auch möglich, dass der Heizlack unmittelbar auf die dem Heizelement benachbarte Schicht des erfindungsgemäß vorgesehenen Schichtaufbaus aufgebracht ist, insbesondere also auf der bzw. einer elektrischen Isolationsschicht.

Die Verwendung einer elektrisch leitfähigen Heizlackschicht im Heizelement bietet weiterhin den Vorteil, dass selbst bei einer Beschädigung der Heizlackschicht durch ein sämtliche Schichten der Heizmatte bis zur Schicht des Heizelementes durchdringenden Fremdkörper, die grundsätzliche Funktionsweise des Heizelementes - anders als bei einem durchtrennten Heizdraht - nicht beeinträchtigt wird. Um dennoch zu verhindern, dass elektrischer Strom über einen bis zum Heizelement ragenden Fremdkörper aus der Heizmatte gelangen kann, ist auf der von dem Heizelement abgewandten Seite der Isolationsschicht eine elektrisch leitende Erdschlusserkennungsschicht angeordnet. Bei der Erdschlusserkennungsschicht kann es sich bspw. um eine Metallfolie, um eine andere elektrisch leitende Folie oder um einen elektrisch leitfähigen Lack handeln. Wird ein Stromfluss über die Erdschlusserkennungsschicht festgestellt, ist die Erdschlusserkennungsschicht über einen Fremdkörper mit der Heizlackschicht elektrisch verbunden. Um die Gefahr von elektrischen Stromschlägen etc. zu vermeiden, kann die Stromzufuhr zum Heizelement dann unterbrochen werden. Ist der Fremdkörper entfernt, kann das Heizelement aber grundsätzlich wieder in Betrieb genommen werden.

Die erfindungsgemäße Heizmatte wird durch eine trittfeste Schutzschicht abgeschlossen, die ein Rohfußbodenbelagsmaterial aus glasfaserverstärktem und/oder aramidfaserverstärktem Kunststoff umfasst und vorzugsweise daraus gebildet ist. Die erfindungsgemäße Schutzschicht schützt die darunterliegenden Schichten vor Beschädigungen durch die bei der Verwendung der Heizmatte im Fußbodenbereich üblicherweise auftretenden Belastungen. Vorzugsweise handelt es sich bei dem Rohfußbodenbelagsmaterial um einen für die Verwendung als Rohfußbodenbelag in Flugzeugen zugelassenen glasfaserverstärkten und/oder aramidfaserverstärkten Kunststoff.

Es ist bevorzugt, wenn vorzugsweise wenigstens ein Teil der paarweise symmetrischen Schichten jeweils identisch ausgestaltet ist. "Identisch" bedeutet in diesem Fall, dass die fraglichen Schichten jeweils aus gleichem Material sind und/oder die gleiche Schichtdicke aufweisen. Sind sowohl die Materialen und die Schichtdicken sämtlicher symmetrisch zum Heizelement angeordneten Schichtpaare identisch, lässt sich die Heizmatte beliebig im Fußbodenbereich anordnen, ohne dass eine Vorzugsrichtung zu beachten wäre. Dies ist besonders bei unsymmetrisch ausgestalteten Heizmatten vorteilhaft, die dann je nach Bedarf orientiert werden können. Gleiches gilt auch, um ggf. eine gewünschte oder erforderliche Anordnung von Anschlüssen der Heizmatte zu erreichen.

Vorzugsweise sind die Schichten der Heizmatte am umlaufenden Rand der Heizmatte versiegelt, um das Eindringen von Feuchtigkeit, Schmutz, o. Ä. zwischen die Schichten der Heizmatte zu verhindern. Je nach Material der einzelnen Schichten können diese heißversiegelt werden. Da durch die Versiegelung die Funktion des Heizelementes beeinträchtigt werden kann und/oder das Heizelement je nach gewählter Versiegelungstechnik nicht zur unmittelbaren Versiegelung geeignet ist, ist bevorzugt, wenn das Heizelement vom umlaufenden Rand zurückversetzt angeordnet ist. In diesem Fall erfolgt die Versiegelung ausschließlich mit anderen Schichten, die das Heizelement dann aber vollständig und dicht umschließen.

Am Heizelement ist bevorzugt steckerlos ein Stromversorgungskabel befestigt. Durch eine entsprechende steckerlose Verbindung wird sichergestellt, dass die Anbindung des Stromversorgungskabels nicht oder nur kaum aufträgt. Bei dem Stromversorgungskabel handelt es sich vorzugsweise ein Flachbandkabel. Das Stromversorgungskabel kann dabei vorzugsweise eine ähnliche Dicke wie die Heizmatte aufweisen. Unabhängig davon kann das Stromversorgungskabel auch wenigstens eine zusätzliche Ader zu Anbindung wenigstens einer Erdschlusserkennungsschicht aufweisen, sodass keine gesonderten Leitungen für die Erdschlussüberwachung erforderlich sind.

Durch die Verwendung einer elektrisch leitfähigen Heizlackschicht im Heizelement und trotz des dadurch erforderlichen Schichtaufbaus lässt sich eine geringe Dicke der Heizmatte erreichen. Die Dicke der Heizmatte kann bspw. zwischen 0,8 mm und 2,4 mm, vorzugsweise zwischen 1,0 mm und 2,2 mm, weiter vorzugsweise zwischen 1,2 mm und 2,0 mm betragen.

Das Heizelement ist vorzugsweise auf die an Bord eines Flugzeugs übliche Spannung von 115 VAC oder 28 VDC für die maximale Heizleistung angepasst.

Durch die geringe Dicke der Heizmatte ist es möglich, dass diese lediglich in einer Aussparung im Rohfußboden - also einer von oben zugänglichen Vertiefung - eingelegt werden, bevor darüber der eigentliche Fußbodenbelag verlegt wird, sodass sich der erfindungsgemäße Fußbodenaufbau ergibt.

Insbesondere ist es anders als im Stand der Technik nicht mehr erforderlich, ein Element bzw. das unterste Element des Fußbodenaufbaus vollständig zu ersetzen. Auch ist das Heizelement nach erfolgter Montage und Fertigstellung des Fußbodenaufbaus noch vergleichsweise einfach erreichbar und bei Bedarf austauschbar. Es muss hierfür lediglich der Fußbodenbelag entfernt werden, der in der Regel nur mit doppelseitigem Klebeband an dem Rohfußboden befestigt ist. Die erfindungsgemäße Heizmatte eignet sich dabei besonders zur Nachrüstung, da sich die für die Heizmatte erforderliche Aussparung regelmäßig noch nachträglich in einen Rohfußboden einbringen lässt.

Unabhängig davon, ob die erfindungsgemäße Heizmatte in einen Fußboden nachgerüstet wird, ist die dafür vorgesehene oder zu schaffende Aussparung an die Breite, Länge und Dicke der Heizmatte anzupassen. Dies ist erforderlich, um Unebenheiten im letztendlichen Fußboden zu vermeiden, die zusätzliche Belastungen des Fußbodens bedeuten würden.

Die zur Auflage des Fußbodenbelags vorgesehen Schicht des Rohfußbodens kann bspw. aus glasfaserverstärktem Kunststoff-Platten oder Matten gebildet sein, die vorzugsweise eine zur Dicke der Heizmatte vergleichbare Dicke aufweisen. Die erforderliche Aussparung kann dann durch eine Ausnehmung in eben diesen Platten oder Matten geschaffen werden. Diese lassen sich bei Bedarf auch noch im Zuge einer Nachrüstung schaffen.

Es ist bevorzugt, wenn im Rohfußboden ein Schlitz zur Aufnahme des Stromversorgungskabels ausgehend von der Aussparung vorgesehen ist. Das Stromversorgungskabel kann dann in einer einfach zu schaffenden Aussparung in der Ebene des Rohfußbodens an eine geeignete Anschlussstelle geführt werden, ohne dass hierfür die Struktur des Flugzeugs verändert werden müsste. Insbesondere wenn es sich bei dem Stromversorgungskabel um ein Flachbandkabel handelt, ist es regelmäßig ausreichend, wenn sich der Schlitz lediglich in der zur Auflage des Fußbodenbelages vorgesehenen Schicht des Rohfußbodens befindet. Der Fußbodenbelag kann dann den Schlitz regelmäßig überspannen, ohne dass es zur Unebenheiten im Fußboden kommt.

Zur Erläuterung des erfindungsgemäßen Verfahrens wird auf die vorstehenden Ausführungen verwiesen. Wie bereits dargelegt, eignet sich die erfindungsgemäße Heizmatte sowohl zur Erstausrüstung eines Flugzeugs als auch zum Nachrüsten, wofür selbstverständlich der Fußbodenbelag entfernt und anschließend eine geeignete Aussparung in dem bereits verlegten Rohfußboden geschaffen werden muss, bevor die Heizmatte installiert und anschließend der Fußbodenbelag wieder aufgebracht wird. Handelt es sich um eine Erstausrüstung, kann die Aussparung durch das Vorsehen einer geeigneten Ausnehmung in den Schichten des Rohfußbodens geschaffen werden, bevor diese in das Flugzeug eingebracht werden.

Die Erfindung wird nun anhand einer vorteilhaften Ausführungsform unter Bezugnahme auf die beigefügten Zeichnungen beispielhaft beschrieben. Es zeigen:
- Figur 1a, b:: schematische Darstellungen des Schichtaufbaus einer erfindungsgemäßen Heizmatte;
- Figur 2a, b:: schematische Darstellung eines erfindungsgemäßen Fußbodenaufbaus mit einer erfindungsgemäßen Heizmatte gemäß Figur 1; und
- Figur 3a, b:: schematische Darstellung der Einbettung einer erfindungsgemäßen Heizmatte in den Fußboden eines Flugzeugs.

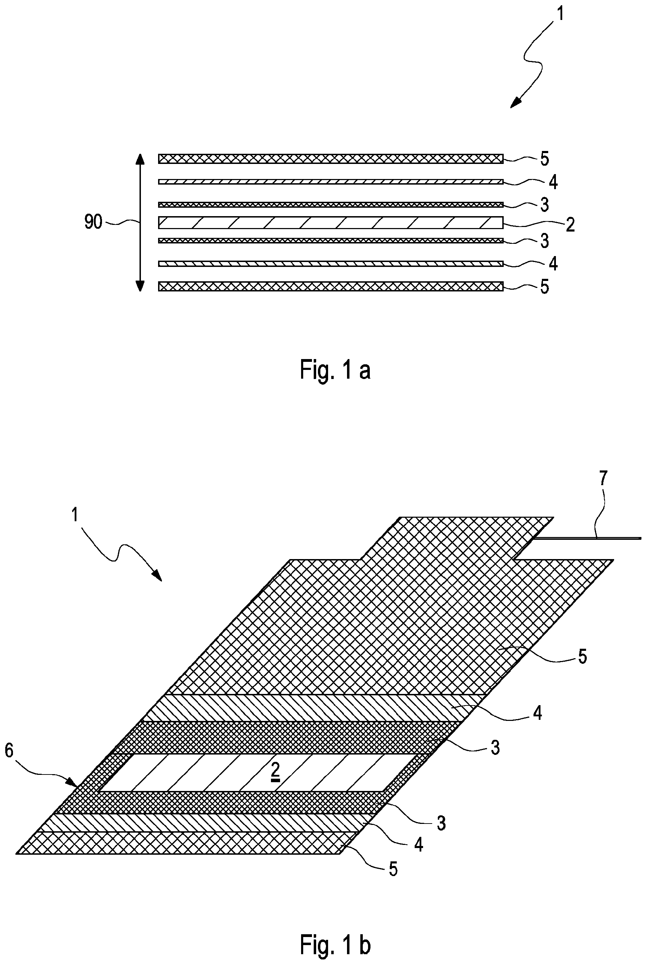

In Figur 1 ist der Schichtaufbau einer erfindungsgemäßen Heizmatte 1 schematisch dargestellt. Figur 1a zeigt den grundsätzlichen, nicht maßstabsgetreuen Schichtaufbau im Querschnitt, während Figur 1b die Heizmatte 1 im Teilaufriss zeigt.

Zentral in der Heizmatte 1 ist flächiges, elektrisches Heizelement 2 umfassend eine elektrisch leitfähige Heizlackschicht. Die Heizlackschicht ist auf einer Substratfolie aufgetragen, ist kohlenstoffnanoröhrenfrei und umfasst ein Polymer sowie ein Halbleitermaterial. An dem Heizelement 2 ist ein steckerlos mit der Heizlackschicht elektrisch kontaktiertes, als Flachbandkabel ausgestaltetes Stromversorgungskabel 7 angebunden. Das Heizelement 2 entspricht somit im Wesentlichen der Heizvorrichtung gemäß der deutschen Patentanmeldung DE 10 2012 207 708 A1.

Das Heizelement 2 ist beidseitig von jeweils einer elektrischen Isolationsschicht 3 umgeben, die identisch ausgestaltet sind.

Darauf folgt jeweils eine elektrisch leitende Erdschlusserkennungsschicht 4. Die Erdschlusserkennungsschichten 4 sind im dargestellten Ausführungsbeispiel vorzugsweise aus einem identischen, elektrisch leitfähigen Lack gebildet, wobei grundsätzlich auch die Verwendung identischer Metallfolien möglich ist. Beide Erdschlusserkennungsschichten 4 sind mit einer als Erdschlusskennungslitze vorgesehenen Ader im Stromversorgungskabel 7 elektrisch verbunden.

Der Schichtaufbau der Heizmatte 1 wird durch trittfeste Schutzschichten 5 abgeschlossen, die auf beiden Seiten der Heizmatte 1 identisch ausgestaltet sind. Die Schutzschichten 5 sind aus für die Verwendung als Rohfußbodenbelag in Flugzeugen zugelassenem glasfaserverstärkten und/oder aramidfaserverstärktem Kunststoff.

Die einzelnen Schichten 2-5 sind untereinander jeweils flächig verklebt. Darüber hinaus sind die Schichten 3-5 am umlaufenden Rand heißversiegelt. Da sich das Heizelement 2 nicht zur Heißversiegelung eignet, ist das Heizelement 2 gegenüber den übrigen Schichten 3-5 zurückversetzt angeordnet, sodass sich am umlaufenden Rand ein heizelementfreier Bereich 6 ergibt, indem die Heißversiegelung erfolgt. Das Heizelement 2 ist somit vollständig und dicht von den anderen Schichten 3-5 umschlossen.

Die Gesamtdicke 90 des Heizelements 1 aus Figur 1 beträgt 1,27 mm.

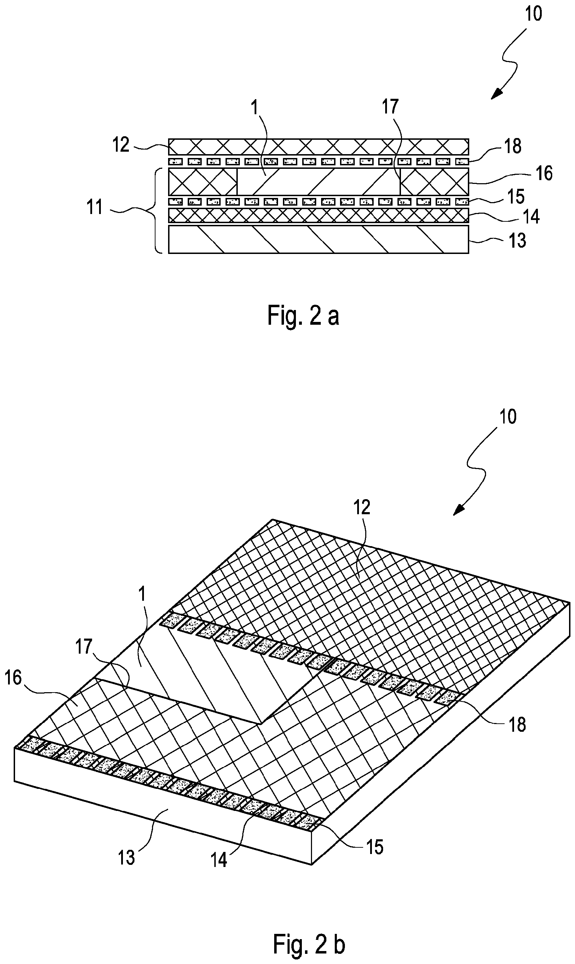

In Figur 2 ist ein erfindungsgemäßer Fußbodenaufbau 10 umfassend einen Rohfußboden 11 und einen Fußbodenbelag 12 gezeigt.

Der Rohfußboden 11 baut auf einer aus dem Stand der Technik bekannten Bodenplatte 13 (ohne Heizelemente) auf, auf dem eine vinylhaltige Wassersperrschicht 14 angeordnet ist. Darauf ist mithilfe eines Klebebandes 15 eine zur Auflage des Fußbodenbelags 12 vorgesehen Schicht 16 aus glasfaserverstärktem Kunststoff-Matten befestigt. Die Schicht 16 weist eine der Gesamtdicke 90 des Heizelementes 1 entsprechende Dicke von 1,27 mm auf. Dadurch bildet die in dieser Schicht 16 vorgesehene Aussparung mit zur Länge und Breite des Heizelementes 1 passende Ausdehnung eine Aussparung 17, die in Länge, Breite und auch Dicke dem Heizelement 1 entspricht.

Das Heizelement 1 ist in eben diese Aussparung 17 eingefügt, wobei sich eine ebene, durch Heizelement 1 und Schicht 16 gebildete, praktisch durchgehende Oberfläche ergibt. Auf dieser Oberfläche ist Mithilfe von Klebeband 18 der Fußbodenbelag 12 befestigt. Bei dem Fußbodenbelag 12 kann es sich um Teppich oder nicht-textilen Belag handeln.

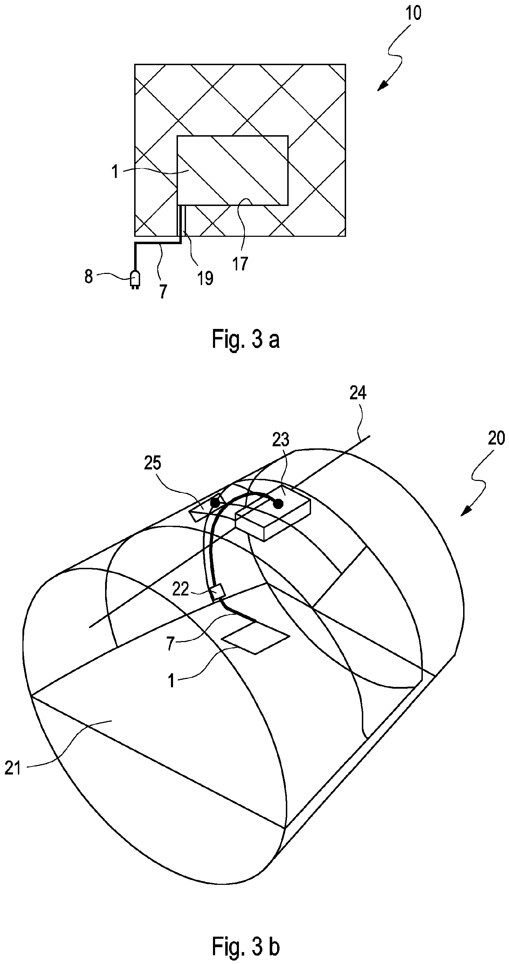

In Figur 3 ist die Integration der Heizmatte 1 aus Figur 1 bzw. die Realisierung des Fußbodenaufbaus 10 gemäß Figur 2 in den Fußboden 21 eines Flugzeugs 20 dargestellt.

Wie in Figur 3a zu erkennen, ist im Fußbodenaufbau 10 nicht nur eine Aussparung 17 für die Heizmatte 1 vorgesehen, sondern außerdem ein Schlitz 19, durch den das Stromversorgungskabel 7 geführt ist, ohne dass durch das Stromversorgungskabel 7 eine Unebenheit im Fußbodenbelag 12 entstehen würde. Das Stromversorgungskabel 7 ist seitlich aus dem Fußbodenaufbau 10 hinausgeführt und am freien Ende mit einem Stecker 8 versehen.

Der Stecker 8 kann bspw. mit einer hinter der Wandverkleidung im Innern eines Flugzeugs 20 angeordneten Buchse 22 verbunden sein. Die Buchse 22 ist über eine Steuerungsbox 23 mit der flugzeuginternen Stromversorgung 24 verbunden. Im Bereich der Wandverkleidung ist weiterhin ein mit der Steuerungsbox 23 verbundenes Bedienpanel 25, bspw. ein Schalter, vorgesehen, über welches die Temperatur der Heizmatte 1 eingestellt werden kann.

Die Steuerungsbox 23 ist dazu ausgebildet, die der Heizmatte 1 zugeführte elektrische Energie zu regeln, um die gewünschte, am Bedienpanel 25 eingestellte Temperatur zu erreichen. Die Überprüfung der Temperatur erfolgt allein durch Ermittlung des elektrischen Widerstandes des Heizelementes 2 der Heizmatte 1, welcher unmittelbar in der Steuerungsbox 23 ermittelt werden kann. Ein gesonderter Temperatursensor im Bereich der Heizmatte 1 ist also nicht erforderlich. Die Steuerungsbox 23 überwacht weiterhin die Spannungsfreiheit der Erdschlusserkennungsschichten 4 der Heizmatte 1 und unterbricht ggf. die elektrische Versorgung der Heizmatte 1.

Die erfindungsgemäße Heizmatte 1 eignet sich besonders für die Verwendung in Bereichen, in denen regelmäßig Feuchtigkeit auftreten kann, wie bspw. Tür- oder Küchenbereichen. Es ist aber selbstverständlich auch möglich, die erfindungsgemäße Heizmatte 1 an beliebiger anderer Stelle in einem Flugzeug oder in einer sonstigen Umgebung zu verwenden.

## Patentansprüche

1. Heizmatte (1) zur Verwendung in einem Fußbodenaufbau (10) insbesondere in Flugzeugen (20), wobei die Heizmatte (1) einen Schichtaufbau mit mehreren, untereinander fest verbundenen Schichten aufweist, mit der symmetrischen Schichtfolge:
a) trittfeste Schutzschicht (5) umfassend ein Rohfußbodenbelagsmaterial aus glasfaserverstärktem und/oder aramidfaserverstärktem Kunststoff;
b) elektrisch leitende Erdschlusserkennungsschicht (4);
c) elektrische Isolationsschicht (3);
d) flächiges, elektrisches Heizelement (2) umfassend eine elektrisch leitfähige Heizlackschicht;
**dadurch gekennzeichnet, dass** die Schichtfolge die folgenden weiteren Schichten aufweist:
e) eine weitere elektrische Isolationsschicht (3);
f) eine weitere elektrisch leitende Erdschlusserkennungsschicht (4); und
g) eine weitere trittfeste Schutzschicht (5).

2. Heizmatte nach Anspruch 1,
**dadurch gekennzeichnet, dass**
wenigstens ein Teil der paarweise symmetrischen Schichten (3, 4, 5) jeweils identisch ausgestaltet sind.

3. Heizmatte nach einem der vorhergehenden Ansprüche,
**dadurch gekennzeichnet, dass**
die Schichten der Heizmatte (1) am umlaufenden Rand der Heizmatte (1) versiegelt sind, wobei vorzugsweise das Heizelement (2) vom umlaufenden Rand zurückversetzt angeordnet ist.

4. Heizmatte nach einem der vorhergehenden Ansprüche,
**dadurch gekennzeichnet, dass**
ein steckerlos am Heizelement (2) befestigtes Stromversorgungskabel (7) vorgesehen ist, wobei das Stromversorgungskabel (7) vorzugsweise ein Flachbandkabel ist und/oder wenigstens eine zusätzliche Ader zur Anbindung wenigstens einer Erdschlusserkennungsschicht (4) aufweist.

5. Heizmatte nach einem der vorhergehenden Ansprüche,
**dadurch gekennzeichnet, dass**
die elektrisch leitfähige Heizlackschicht kohlenstoffnanoröhrenfrei ist, und/oder ein Polymer und/oder ein Halbleitermaterial umfasst.

6. Heizmatte nach einem der vorhergehenden Ansprüche,
**dadurch gekennzeichnet, dass**
die trittfeste Schutzschicht (5) aus einem für die Verwendung als Rohfußbodenbelag (10) in Flugzeugen (20) zugelassenen glasfaserverstärktem und/oder aramidfaserverstärktem Kunststoff ist.

7. Heizmatte nach einem der vorhergehenden Ansprüche,
**dadurch gekennzeichnet, dass**
die Dicke der Heizmatte (1) zwischen 0,8 mm und 2,4 mm, vorzugsweise zwischen 1,0 mm und 2,2 mm, weiter vorzugsweise zwischen 1,2 mm und 2,0 mm ist.

8. Fußbodenaufbau (10), insbesondere für ein Flugzeug, umfassend
- einen Rohfußboden (11) mit einer Aussparung (17) für eine Heizmatte (1),
- eine darin eingelegte Heizmatte (1) gemäß einem der vorhergehenden Ansprüche, und
- einem auf den Rohfußboden (11) und über die Heizmatte (1) verlegtem Fußbodenbelag (12),
wobei die Aussparung (17) im Rohfußboden an die Breite, Länge und Dicke (90) der Heizmatte (1) angepasst ist.

9. Fußbodenaufbau nach Anspruch 8,
**dadurch gekennzeichnet, dass**
die zur Auflage des Fußbodenbelags (12) vorgesehen Schicht (16) des Rohfußbodens (11) aus glasfaserverstärktem Kunststoff-Platten oder Matten ist.

10. Fußbodenaufbau nach Anspruch 8 oder 9,
**dadurch gekennzeichnet, dass**
im Rohfußboden (11) ein Schlitz (19) zur Aufnahme des Stromversorgungskabels (7) ausgehend von der Aussparung (17) vorgesehen ist.

11. Verfahren zur Herstellung eines Fußbodenaufbaus (10) gemäß einem der Ansprüche 8 bis 10, mit den Schritten:
a) Herstellen einer, an die Maße der Heizmatte (19 angepasste Aussparung (17) in die oberste Schicht (16) des Rohfußbodens (11);
b) Einbringen der Heizmatte (1) in die Aussparung (17); und
c) Verlegen eines Fußbodenbelags (12) auf dem Rohfußboden (11) und über die Heizmatte (1).

12. Verfahren nach Anspruch 11,
**dadurch gekennzeichnet, dass**
vor Herstellung der Aussparung (17) auf dem Rohfußboden (11) aufliegender Fußbodenbelag (12) entfernt wird.

13. Verfahren nach Anspruch 11,
**dadurch gekennzeichnet, dass**
die Aussparung (17) vor Herstellung des Rohfußbodens (11) in das den Abschluss des Rohfußbodens (11) bildende Element (16) eingebracht wird, bevor das Element (16) verlegt wird.

14. Verfahren nach einem der Ansprüche 11 bis 13,
**dadurch gekennzeichnet, dass**
im Rohfußboden (11) ein Schlitz (19) zur Aufnahme des Stromversorgungskabels (7) ausgehend von der Aussparung (17) vorgesehen wird.

## Claims

1. Heating mat (1) for use in a floor structure (10), in particular in aircraft (20), wherein the heating mat (1) has a layered structure with a plurality of layers firmly connected to one another, with the following symmetrical layer sequence:
a) walkable protection layer (5) comprising an unfinished floor covering material made of fibreglassreinforced and/or aramid fibre-reinforced plastic;
b) electrically conductive earth fault detection layer (4) ;
c) electrical insulation layer (3); and
d) flat electrical heating element (2) comprising an electrically conductive heating varnish layer;
**characterized in that**
the layer sequence comprises the following further layers:
e) a further electrical insulation layer (3);
f) a further electrically conductive earth fault detection layer (4); and
g) a further walkable protection layer (5).

2. Heating mat according to Claim 1,
**characterized in that** at least some of the pairwise symmetrical layers (3, 4, 5) are formed identically in each case.

3. Heating mat according to either of the preceding claims, **characterized in that**
the layers of the heating mat (1) are sealed at the circumferential edge of the heating mat (1), wherein preferably the heating element (2) is arranged set back from the circumferential edge.

4. Heating mat according to one of the preceding claims, **characterized in that**
a power supply cable (7) attached to the heating element (2) plug-free is provided, wherein the power supply cable (7) is preferably a ribbon cable and/or has at least one additional core for connecting at least one earth fault detection layer (4).

5. Heating mat according to one of the preceding claims, **characterized in that**
the electrically conductive heating varnish layer is free of carbon nanotubes and/or comprises a polymer and/or a semiconductor material.

6. Heating mat according to one of the preceding claims, **characterized in that**
the walkable protection layer (5) is made of a fibreglass-reinforced and/or aramid fibre-reinforced plastic approved for use as an unfinished floor covering (10) in aircraft (20).

7. Heating mat according to one of the preceding claims, **characterized in that**
the thickness of the heating mat (1) is between 0.8 mm and 2.4 mm, preferably between 1.0 mm and 2.2 mm, further preferably between 1.2 mm and 2.0 mm.

8. Floor structure (10), in particular for an aircraft, comprising
- an unfinished floor (11) with a recess (17) for a heating mat (1),
- a heating mat (1), inserted in the recess, according to one of the preceding claims, and
- a floor covering (12) laid on the unfinished floor (11) and over the heating mat (1),
wherein the recess (17) in the unfinished floor is adapted to the width, length and thickness (90) of the heating mat (1).

9. Floor structure according to Claim 8,
**characterized in that**
the layer (16) of the unfinished floor (11) provided for supporting the floor covering (12) is made of fibreglassreinforced plastic panels or mats.

10. Floor structure according to Claim 8 or 9,
**characterized in that**
a slot (19) is provided in the unfinished floor (11) for receiving the power supply cable (7) starting from the recess (17).

11. Method for producing a floor structure (10) according to one of Claims 8 to 10, comprising the following steps:
a) making a recess (17) adapted to the dimensions of the heating mat (19) in the uppermost layer (16) of the unfinished floor (11);
b) inserting the heating mat (1) into the recess (17); and
c) laying a floor covering (12) on the unfinished floor (11) and over the heating mat (1).

12. Method according to Claim 11,
**characterized in that**
the floor covering (12) resting on the unfinished floor (11) is removed before making the recess (17).

13. Method according to Claim 11,
**characterized in that**
before the unfinished floor (11) is produced, the recess (17) is made in the element (16) forming the termination of the unfinished floor (11) before the element (16) is laid.

14. Method according to one of Claims 11 to 13,
**characterized in that**
a slot (19) is provided in the unfinished floor (11) for receiving the power supply cable (7) starting from the recess (17).

## Revendications

1. Tapis chauffant (1) destiné à être utilisé dans une structure de plancher (10), notamment dans des avions (20), le tapis chauffant (1) présentant une structure en couches comportant plusieurs couches reliées de manière fixe les unes aux autres, la séquence de couches symétriques étant la suivante :
a) une couche de protection résistante à l'usure (5) comprenant un matériau brut de revêtement de plancher en matière synthétique renforcée par des fibres de verre et/ou des fibres d'aramide ;
b) une couche électriquement conductrice de détection de mise à la terre (4) ;
c) une couche d'isolation électrique (3) ;
d) un élément chauffant électrique sensiblement bidimensionnel (2) comprenant une couche de vernis chauffant électriquement conductrice ;
**caractérisé en ce que** la séquence de couches comporte les couches supplémentaires suivantes :
e) une autre couche d'isolation électrique (3) ;
f) une autre couche électriquement conductrice de détection de mise à la terre (4) ; et
g) une autre couche protectrice résistante à l'usure (5) .

2. Tapis chauffant selon la revendication 1,
**caractérisé en ce que**
au moins une partie des couches symétriques par paires (3, 4, 5) sont chacune conçues de manière identique.

3. Tapis chauffant selon l'une des revendications précédentes,
**caractérisé en ce que**
les couches du tapis chauffant (1) sont scellées au niveau du bord périphérique de l'élément chauffant (1), de préférence l'élément chauffant (2) étant disposé en retrait du bord périphérique.

4. Tapis chauffant selon l'une des revendications précédentes,
**caractérisé en ce que**
un câble d'alimentation en courant (7) est prévu qui est fixé sans fiche à l'élément chauffant (2), le câble d'alimentation en courant (7) étant de préférence un câble plat et/ou comportant au moins un fil supplémentaire destiné au raccordement d'au moins une couche de détection de mise à la terre (4).

5. Tapis chauffant selon l'une des revendications précédentes,
**caractérisé en ce que**
la couche de vernis chauffant électriquement conductrice est exempte de nanotubes en carbone et/ou comprend un polymère et/ou un matériau semi-conducteur.

6. Tapis chauffant selon l'une des revendications précédentes,
**caractérisé en ce que**
la couche de protection résistante à l'usure (5) comprend une matière synthétique renforcée par des fibres d'aramide et/ou des fibres de verre approuvée pour être utilisée comme revêtement de plancher brut (10) dans des avions (20).

7. Tapis chauffant selon l'une des revendications précédentes,
**caractérisé en ce que**
l'épaisseur du tapis chauffant (1) est comprise entre 0,8 mm et 2,4 mm, de préférence entre 1,0 mm et 2,2 mm, plus préférablement entre 1,2 mm et 2,0 mm.

8. Structure de plancher (10), destinée notamment à des avions, ladite structure de plancher comprenant
- un plancher brut (11) pourvu d'un évidement (17) destiné à un tapis chauffant (1),
- un tapis chauffant (1), inséré à l'intérieur, selon l'une des revendications précédentes, et
- un revêtement de plancher (12) posé sur le plancher brut (11) et par-dessus le tapis chauffant (1),
l'évidement (17) ménagé dans le plancher brut étant adapté à la largeur, la longueur et l'épaisseur (90) du tapis chauffant (1).

9. Structure de plancher selon la revendication 8, **caractérisée en ce que**
la couche (16) du plancher brut (11), destinée à supporter le revêtement de plancher (12), comprend des panneaux ou des tapis en matière synthétique renforcée par des fibres de verre.

10. Structure de plancher selon la revendication 8 ou 9, **caractérisée en ce que**
une fente (19) est prévue dans le plancher brut (11) pour recevoir le câble d'alimentation en courant (7) à partir de l'évidement (17).

11. Procédé de réalisation d'une structure de plancher (10) selon l'une des revendications 8 à 10, ledit procédé comprenant les étapes suivantes :
a) ménager dans la couche supérieure (16) du plancher brut (11) un évidement (17) qui est adapté aux dimensions du tapis chauffant (19) ;
b) insérer le tapis chauffant (1) dans l'évidement (17) ; et
c) poser un revêtement de plancher (12) sur le plancher brut (11) et par-dessus le tapis chauffant (1) .

12. Procédé selon la revendication 11,
**caractérisé en ce que**
le revêtement de plancher (12) reposant sur le plancher brut (11) est retiré avant de ménager l'évidement (17).

13. Procédé selon la revendication 11,
**caractérisé en ce que**
avant de réaliser le plancher brut (11), l'évidement (17) est ménagé dans l'élément (16) formant l'extrémité du plancher brut (11) avant de poser l'élément (16).

14. Procédé selon l'une des revendications 11 à 13,
**caractérisé en ce que**
une fente (19) est prévue dans le plancher brut (11) pour recevoir le câble d'alimentation en courant (7) à partir de l'évidement (17).
